# EUROPEAN PATENT SPECIFICATION

(11) **EP 1 597 989 B1**
(45) Date of publication and mention of the grant of the patent: **17.12.2008**
(21) Application number: 04253652.4
(22) Date of filing: 18.06.2004
(51) Int. Cl.: A47J 27/212, A47J 27/21

(54) **Electric kettle having LED temperature indication through water**
Wasserkocher mit LED Temperaturanzeige durch das Wasser
Bouilloire électrique comportant un dispositif de signalisation LED de la température en passant par l'eau

(30) Priority: 21.05.2004 CN 04103616
(43) Date of publication of application: 23.11.2005
(73) Proprietor: Euro Suisse International Limited, Admiralty, Hong Kong (CN)
(72) Inventor: Lamba, Tajinder Singh, Moscow Dom 50 (RU)
(74) Representative: White, Nicholas John

(56) References cited:
- EP-A- 1 518 483
- WO-A-00/65967
- WO-A-03/020096
- GB-A- 2 332 522
- GB-A- 2 358 788

## Description

### Background of the Invention

The present invention relates to electric kettles. More particularly, although not exclusively, the invention relates to an electric kettle having coloured LEDs for indicating water temperature through water in the kettle and visible through a kettle window.

Modern electric kettles have a power-indicating light - often associated with an ON-OFF switch. The light simply illuminates when the heating element is energised, and goes out when boiling occurs and the heating element is de-energised. A problem with such known kettles is that it is not possible to determine visually how long it might take for the water in the kettle to boil.

It is known to provide electric kettles with a see-through window to provide an indication of water depth. Such windows are usually associated with a water column in which a brightly coloured float resides for observation through the window. Such windows do not provide any visible indication of water temperature.

WO00/65967 describes an electric water heater with a translucent reservoir and three different coloured bulbs for illuminating the water with a colour indicative of water temperature. A control circuit connected to a water temperature sensor controls the operation of the bulbs such that each bulb is illuminated between certain temperature. The bulbs are positioned below the floor of the reservoir and above a reflector, such that some of the light from the bulbs passes through the floor to illuminate the water in the reservoir.

GB 2 332 522 describes an electric kettle with a sight glass for determining the water level in the kettle. A light is received in a cavity at the base of the sight glass near its inlet which illuminates to indicate connection to a power supply. In an alternative embodiment which is not illustrated, two different coloured lights may be provided and controlled such that the colour of illumination of the sight glass is indicative of temperature. One light is illuminated during heating up until boiling point, at boiling point and/or when the kettle has switched off a different coloured light is illuminated.

### Objects of the Invention

It is an object of the present invention to overcome or substantially ameliorate the above disadvantage and/or more generally to provide an improved electric kettle having light emitting temperature-indication visible through water in the kettle at a kettle window.

### Disclosure of the Invention

There is disclosed herein an electric kettle, comprising:
a water-containing vessel having a floor and a window,
an electric heating element disposed with respect to the vessel so as to transfer heat to water contained therein,
a temperature sensor for sensing water temperature within the vessel,
a light emitter shining into the vessel to illuminate water therein, each light emitter having a different colour-emission characteristic; and
circuitry associated with the temperature sensor and each light emitter that controls the operation of each emitter to illuminate the water such that below and above a first temperature the water is illuminated with a first and second colour respectively, characterised in that
each light emitter comprises an LED (25) located within a hood (24) that extends through the floor of the vessel in a sealed manner.
Preferably, the circuitry controls the operation of each emitter to illuminate the water with the second colour between the first temperature and a second higher temperature sensed by the temperature sensor, and with a third colour above the second temperature.

Preferably, the electric kettle comprises two or more LEDs having different colour-emission characteristics, each LED being controlled by the circuitry and shining into the vessel to illuminate water therein.

Preferably, the electric kettle further comprises a handle formed integrally with the kettle, and wherein the circuitry is located on a PCB located within the handle.

Preferably, the temperature sensor comprises a steam tube extending from the vessel to a thermistor.

Preferably, electric kettle further comprises a base upon which the kettle sits and via which electricity passes from an external source of electricity to the heating element.

### Brief Description of the Drawings

A preferred form of the present invention will now be described by way of example with reference to the accompanying drawings, wherein:
Fig. 1 is a schematic plan illustration of internal components of an electric kettle,
Fig. 2 is a schematic cross-sectional elevation of the electric kettle of Fig. 1, and

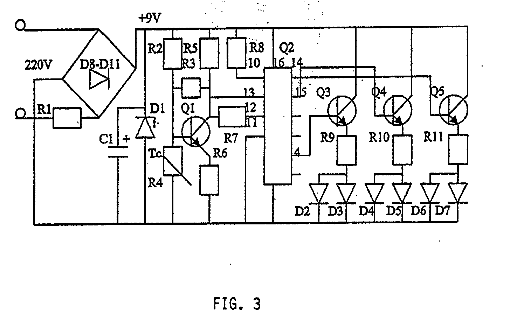

Fig. 3 is a schematic circuit diagram of a PCB incorporated into the electric kettle of Figs. 1 and 2.

### Description of the Preferred Embodiment

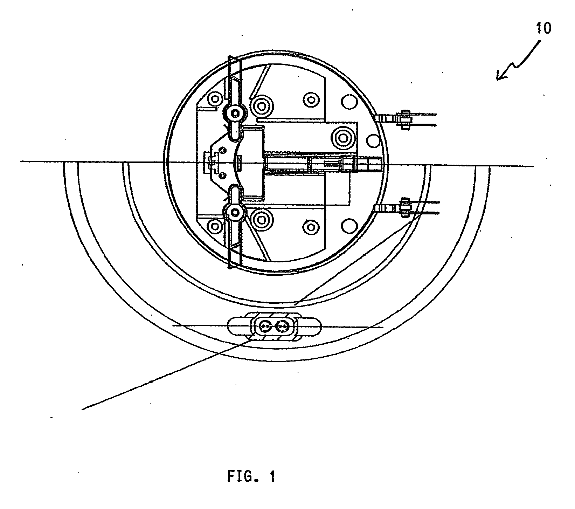

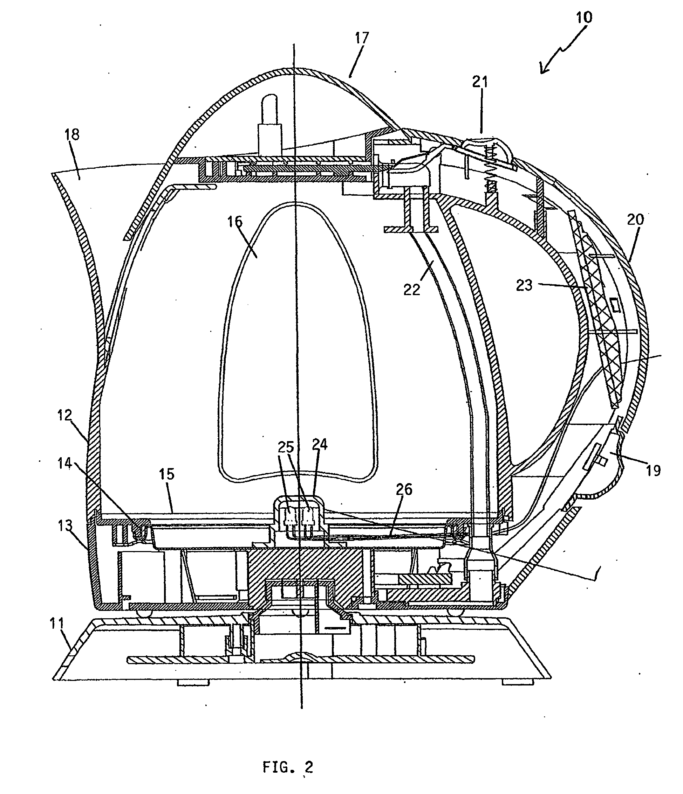

In Figs. 1 and 2 of the accompanying drawings there is depicted schematically an electric kettle the 10. The kettle 10 is made primarily of moulded plastics parts and sits upon a base 11 via which electricity is conveyed to the kettle in a known manner. The kettle includes a vessel 12 and a bottom housing 13 upon which the vessel is attached. Within the bottom housing there is provided a heating element 14 positioned beneath a floor 15 of the vessel 12. The vessel includes a window 16 through which water within the vessel can be viewed from outside. A lid 17 covers the vessel 12. A pooring spout 18 is provided at the top of the vessel 12 alongside the lid 17.

A handle 20 is formed integrally with the vessel 12. There is a power switch having an internal neon light covered by a light-transmissive switch body 19 at the base of the handle.

At the top of the handle, there is a lid-release switch 21 to raise the lid 17. Depending from the lid 17 adjacent to the top portion of the handle 20 is a silicon rubber tube 22 via which steam is relayed from the vessel 12 to a thermistfor or other temperature-sensing device.

A printed circuit board 23 resides within the handle 20 and communicates with the thermistor. The printed circuit board receives power via the base 11 and the switch 19.

Extending through the floor 15 is a light-transmissive hood 24 beneath which there is located a pair of LEDs 25. The LEDs would be of different colour-emission and preferably capable of each emitting colour of different wavelength. Wires 26 extend between the PCB 23 and the LEDs 25. The hood 24 is tightly fitted and sealed to the floor 15 so that water within the vessel 12 cannot leak thereabout.

In use, one fills or partially fills the vessel 12 with cold water and depresses the switch 19. Power is then relayed to the heating element 14 and the PCB activates one or both of the LEDs so as to emit a certain light colour - typically blue light. The light passes through the hood 24 into the water for viewing through the window 16.

As temperature of the water increases, steam passes through the Tube 22 to the thermistor, which in turn provides a signal to the PCB, which (upon determining that a certain temperature has been reached in the water) activates one or both of the LEDs to emit a colour of different wavelength. For example, green light might be emitted. As temperature increases toward boiling point, a red light might be emitted to indicate a high water temperature. Of course, when boiling occurs, the thermistor will send a signal to the PCB to deactivate the heating element 14.

If the water is allowed to partially cool and the switch 19 is again depressed, instead of initially emitting a blue light, a light appropriate for the temperature of the water will be emitted.

It should be appreciated that modifications and alterations obvious to those skilled in the art are not to be considered as beyond the scope of the present invention. For example, the LEDs might - instead of being provided at the floor 15 - be provided at a wall of the vessel 12. Ideally, the LEDs would not be directly visible through the window 16, as it is intended that the LEDs illuminate the water and it is the colour of the water through the window that indicates temperature thereof.

## Claims

1. An electric kettle (10), comprising:
a water-containing vessel (12) having a floor (15) and a window (16),
an electric heating element (14) disposed with respect to the vessel so as to transfer heat to water contained therein,
a temperature sensor (22) for sensing water temperature within the vessel,
light emitters (25) shining into the vessel to illuminate water therein, each light emitter having a different colour-emission characteristic; and
circuitry (23) associated with the temperature sensor and each light emitter (25) that controls the operation of each emitter to illuminate the water such that below and above a first temperature the water is illuminated with a first and second colour respectively, **characterised in that**
each light emitter (25) comprises an LED (25) located within a hood (24) that extends through the floor (15) of the vessel in a sealed manner.

2. The electric kettle (10) of Claim 1, wherein the circuitry controls the operation of each emitter to illuminate the water with the second colour between the first temperature and a second higher temperature sensed by the temperature sensor, and with a third colour above the second temperature.

3. The electric kettle (10) of any one of the preceding claims, further comprising a handle (20) formed integrally with the kettle, and wherein the circuitry (23) is located on a PCB (23) located within the handle (20).

4. The electric kettle (10) of any one of the preceding claims, wherein the temperature sensor comprises a steam tube (22) extending from the vessel to a thermistor.

5. The electric kettle (10) of any one of the preceding claims, further comprising a base (11) upon which the kettle sits and via which electricity passes from an external source of electricity to the heating element (14).

## Patentansprüche

1. Wasserkocher (10), umfassend:
ein Wassergefäß (12) mit einem Boden (15) und einem Fenster (16),
ein elektrisches Heizelement (14), relativ zum Gefäß so angeordnet, dass es Wärme an das darin enthaltene Wasser abgibt,
einen Temperatursensor (22) zum Erfassen der Wassertemperatur im Gefäß,
Lichtemitter (25), die in das Gefäß leuchten, um das darin enthaltene Wasser zu beleuchten, wobei jeder Lichtemitter eine verschiedene Farbemissionscharakteristik hat; und
eine Schaltungsanordnung (23), assoziiert mit dem Temperatursensor und jedem Lichtemittcr (25), die den Betrieb eines jeden Emitters steuert, um das Wasser so zu beleuchten, dass unter und über einer ersten Temperatur das Wasser mit einer ersten bzw. zweiten Farbe beleuchtet wird, **dadurch gekennzeichnet, dass**
jeder Lichtemitter (25) eine Leuchtdiode (LED) (25) umfasst, die innerhalb einer Haube (24) angeordnet ist, die sich auf eine hermetisch gekapselte Weise durch den Boden (15) des Gefäßes erstreckt.

2. Wasserkocher (10) nach Anspruch 1, worin die Schaltungsanordnung den Betrieb eines jeden Emitters steuert, um das Wasser zwischen der ersten Temperatur und einer vom Sensor erfassten zweiten, höhere Temperatur mit der zweiten Farbe zu beleuchten und mit einer dritten Farbe über der zweiten Temperatur.

3. Wasserkocher (10) nach einem der vorhergehenden Ansprüche, außerdem einen Henkel (20) umfassend, der mit dem Wasserkocher integriert geformt ist und worin die Sebaltungsanordnung (23) auf einer Leiterplatte (PCB) (23) angeordnet ist, die im Henkel (20) angeordnet ist.

4. Wasserkocher (10) nach einem der vorhergehenden Ansprüche, worin der Temperatursensor einen Dampfschlauch (22) umfasst, der vom Gefäß zu einem Thermistor verläuft.

5. Wasserkocher (10) nach einem der vorhergehenden Ansprüche, der außerdem einen Sockel (11) umfasst, auf dem der Kessel sitzt und durch den Strom von einer externen Stromquelle zum Heizelement (14) fließt.

## Revendications

1. Bouilloire électrique (10), comportant :
un récipient contenant de l'eau (12) présentant un fond (15) et une fenêtre (16),
un élément de chauffage électrique (14) agencé, relativement au récipient, de façon à transférer de la chaleur à l'eau contenue dans celui-ci,
une sonde de température (22) pour détecter la température de l'eau au sein du récipient, des sources lumineuses (25) éclairant dans le récipient pour éclairer l'eau s'y trouvant, chaque source lumineuse présentant une caractéristique d'émission de couleur distincte ; et
un montage de circuits (23) associé à la sonde de température et à chaque source lumineuse (25) lequel commande le fonctionnement de chaque source pour éclairer l'eau de sorte que, en dessous et au-dessus d'une première température, l'eau est éclairée par des première et seconde couleurs, respectivement,
**caractérisé en ce que**
chaque source lumineuse (25) comporte une diode électroluminescente (DEL) (25) localisée au sein d'un couvercle (24) qui s'étend à travers le fond (15) du récipient de façon hermétique.

2. Bouilloire électrique (10) selon la revendication 1, dans laquelle le montage de circuits commande le fonctionnement de chaque source pour éclairer l'eau au moyen d'une deuxième couleur entre la première température et une seconde température plus élevée détectée par la sonde de température, et au moyen d'une troisième couleur pour une température plus élevée que la seconde température.

3. Bouilloire électrique (10) selon l'une quelconque des revendications précédentes, comportant en outre une anse (20) formée intégralement avec la bouilloire, et dans laquelle le montage de circuits (23) est localisé sur une carte de circuit imprimé, PCB, (23) localisée au sein de l'anse (20).

4. Bouilloire électrique (10) selon l'une quelconque des revendications précédentes, dans laquelle la sonde de température comporte un tube vapeur (22) s'étendant du récipient jusqu'à une thermistance.

5. Bouilloire électrique (10) selon l'une quelconque des revendications précédentes, comportant en outre un socle (11) sur lequel la bouilloire repose et par l'intermédiaire duquel l'électricité transite d'une source externe d'électricité à l'élément de chauffage (14).
